(19) Europäisches Patentamt
European Patent Office
Office européen des brevets

(11) **EP 3 336 729 A1**

(12) **EUROPEAN PATENT APPLICATION**

(43) Date of publication:
**20.06.2018 Bulletin 2018/25**

(51) Int Cl.:
***G06F 17/50*** *(2006.01)*

(21) Application number: **16382604.3**

(22) Date of filing: **15.12.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Airbus Operations, S.L.**
**28906 Getafe Madrid (ES)**

(72) Inventors:
• **VINHA, Nuno**
**28906 Getafe (ES)**
• **VALLESPIN FONTCUBERTA, David**
**28906 Getafe (ES)**
• **DE PABLO FOUCE, Valentín**
**28906 Getafe (ES)**
• **VALERO, Eusebio**
**28906 Getafe (ES)**

(74) Representative: **Elzaburu S.L.P.**
**C/ Miguel Angel, 21**
**28010 Madrid (ES)**

(54) **COMPUTER-AIDED METHOD AND SYSTEM FOR A QUICK PREDICTION OF VORTEX TRAJECTORIES ON AIRCRAFT COMPONENTS CHECKING HIGH PRESSURE GRADIENTS AND HIGH DRAG FRICTION COEFFICIENTS**

(57)     The invention provides a computer-aided method suitable for assisting in the design of an object zone such as a CROR engine of an aircraft subjected to high vorticity and/or low static pressure fields when moving inside a flow field by providing suitable seed points for constructing vortex core lines in a fluid data model of the environment of said object zone and a system based in said method. The method steps are: a) Obtaining a dataset of candidate seeds containing all the cells or points satisfying a condition of the pressure gradient in the direction of the flow or a condition of the drag friction coefficient at the solid boundaries; b) Updating the previous dataset of candidate seeds with all the cells or points satisfying the equation not used for obtaining the dataset in step a).

**FIG. 2**

Description

FIELD OF THE INVENTION

The present invention refers to a method to assist in the design of components with parts moving relative to a flow, particularly Counter Rotating Open Rotor (CROR) engines installed in aircraft, in their endeavour to reduce noise levels, drag, vibrations, and fatigue loads, due to vortex-surface interaction.

BACKGROUND OF THE INVENTION

In recent years Counter Rotating Open Rotor (CROR) engines have become of prime interest in the aeronautical industry, in search for more efficient aircraft configurations. Amongst the biggest drawbacks in these particular engine types are the high levels of noise generated, both broadband and tonal, and design focus is on trying to reduce. As it is well known a major contribution to tonal noise is caused by the first stage rotor blade tip vortices impacting on the second stage rotor. The impact condition is also undesirable from the aerodynamic and structural point of view, as it penalizes drag, and increases significantly vibrations and fatigue loads nearby the impact regions.

Thanks to the development in Computational Fluid Dynamics (CFD) techniques and the exponential growth in computational power today it is possible to obtain detailed flow behaviour predictions under normal operating conditions.

A new problem arises from these types of simulation, which is the large amount of data that needs to be processed to be able to derive valuable conclusions. In particular, the simulations focusing on noise prediction require very small time steps and large meshes which increases the data reduction process and analysis on the part of the designers. Most methodologies in noise prediction move from the CFD analysis directly to noise propagation models based on pressure data around known noise sources which gives quantitative noise information at relevant distances around the source at high computational costs.

Surprisingly, a precise and unique mathematical definition of a vortex does not exist in literature.
A vortex was defined by Lugt in 1979 as "the rotating motion of a multitude of material particles around a common center" [1]. Later on, Robinson provided the following definition: "a vortex exists when instantaneous streamlines mapped onto a plane normal to the vortex core exhibit a roughly circular or spiral pattern, when viewed from a reference frame moving with the center of the vortex core" [2]. Another definition of a vortex came from Portela [3], considering that "a vortex is comprised of a central core region surrounded by swirling streamlines".

The lack of consensus for a rigorous and unique definition of a vortex gave rise to the development of several vortex detection algorithms. Kolar in [4] enumerates more than twenty vortex detection methods developed in the last three decades. The majority of these methods consider that any vortical structure contains a core/skeleton line, and a swirling fluid motion around that line. Hence, two main categories of vortex extraction methods can be found in literature:

- The ones that look for vortex core lines, or the imaginary center of rotational motion, are usually called line-based (LB) methods.
- The ones that search for vortex core regions or for "regions of influence" of the vortex core line [5]. These schemes are commonly known as region-based (RB) methods, mainly allowing the visualization of iso-surfaces of a certain scalar field that represent the vortex core boundary.

According to [6], RB methods are easier to implement and require less computational burden in comparison to LB schemes. However, the latter can provide a more accurate representation of the vortex, especially when the distance between two individual structures is considerably small. This is the biggest limitation of RB methods, with higher relevance for strongly curved rotating structures.

In LB methods, the region of rotational influence of a vortex can additionally be estimated, using surface-based techniques. In [7] we can find several surface methods developed particularly for vortex visualization.

The vorticity-predictor pressure-corrector method is a well-known LB method, and it was introduced by Banks & Singer in 1995 [8]. The algorithm basically extracts streamlines of the vorticity field during a predictor step, correcting these predictions based on the local minimum pressure in a corrector step, and providing a more precise approximation of a vortex core skeleton. The method relies on both a low static pressure and a high vorticity magnitude criterion to investigate if a certain point belongs to a vortex skeleton. Nonetheless, and according to [8], it is possible to have regions with low pressure or with high vorticity magnitude without being associated with a vortex.

Examples of such cases are the flow downstream of an obstacle and a shear flow, respectively. Nevertheless, the authors believe that the combination of these two criteria is a powerful indication of the presence of a vortex.

The algorithm starts by an initialization step, which looks for possible candidate seeds at every grid point of the fluid domain. The initialization of the original Banks & Singer method [8] is based on arbitrary user inputs which may be inferred from thresholds of low static pressure and high vorticity magnitude. A good candidate point is thus a grid point that satisfies the two thresholds. The method also foresees corrections to the position of these candidate points, so that they are not constrained to the grid.

From the candidate points extracted during the pre-processing step, the algorithm starts developing the vortex core lines. At each iteration point, a predictor step is firstly applied, followed by a correction treatment, as we can observe in the following pseudocode (adapted from [6]):

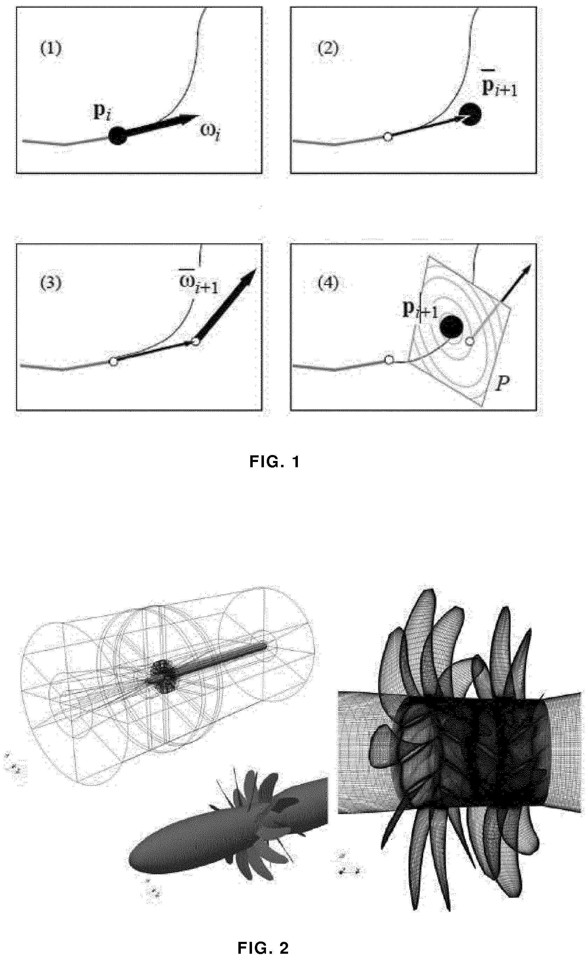

```
1: locate seeds with low pressure P and high vorticity magnitude |ω|
2: for all seeds do
3: repeat
4: compute ωᵢ at current seed point pᵢ(Fig.1_1)
5: step in ωᵢ to predict next point pᵢ₊₁ (Fig.1_2)
6: compute ωᵢ₊₁ at predicted point pᵢ₊₁ (Fig.1_3)
7: procedure (find Pₘᵢₙ on plane ⊥ ωᵢ₊₁ (Fig.1_4)
8: if ∠ (ωᵢ₊₁, ωₚₘᵢₙ) < limit then
9: correct predicted point pᵢ₊₁ to pₚₘᵢₙ
10: else
11: quit corrector phase
12: end if
13: end procedure
14: until skeleton exits domain or is too long
15: end for
```

The steps comprising the original predictor-corrector method are schematically sketched in Figure 1:

- Step 1: Compute the vorticity at a point of the vortex core.
- Step 2: Step in the vorticity direction to predict the next point.
- Step 3: Compute the vorticity at the predicted point.
- Step 4: Correct to the pressure min. in the perpendicular plane.

Note that for the predictor and corrector steps the method uses only vector quantities.

The algorithm expects that any vortex core line stops growing when it starts leaving the fluid domain, and when the total arclength along a skeleton line is at least two times bigger than the highest grid dimension [8]. The method is also capable of eliminating redundant seeds, skeletons, and any spurious feeders that may appear during its computation. The present LB method can additionally be combined with techniques that provide a geometrical approximation of the shape of the vortex, from cross-sections of the vortex tubes in planes perpendicular to the imaginary core.

As explained before, the vortex lines start growing from a set of candidate points resulting from the initialization step. The original method makes the selection of candidates according to high vorticity and low static pressure threshold criteria. A candidate point is thus a grid point that satisfies exclusively these two thresholds. Normally this methodology works fine for simple academic test cases, with a low number of grid points. However, when dealing with a large scale industrial case with high flow complexity (such as the aircraft CROR engine, shown in Figure 2, where each solution snapshot contains around 95 million points), the original initialization may return a huge amount of candidate points. This will directly penalize the subsequent predictor-corrector step, once it has to be started from each one of those candidate points, resulting in excessive and prohibitive computational burdens. Furthermore, by relying exclusively on those two threshold criteria, there is not a physical guarantee that the selected thresholds contain the most relevant features. As an example for the CROR case shown in Figure 2, by setting a threshold for cells whose vorticity magnitude is higher or equal to only 0.15% of the maximum vorticity of the computational domain, this criterion fails to extract cells related to the tip vortex emerging from the first rotating row. The output of the aforementioned vorticity threshold is only associated with the boundary layer of the rotating surfaces, where vorticity can also be high. Alternatively, for the lowest static pressure values of the domain, the corresponding threshold filter retrieves no more than points or cells located in low pressure zones of the blades. And for the present CROR test case, significant trial and error tests were required to correctly tune a static pressure threshold that allowed the extraction of cells or points related to tip vortices.

The original initialization process relies only on thresholds, and so there is always a user interference that cannot be avoided in the Banks & Singer method. Moreover, as the present CROR test case demonstrated, it is not a straightforward task for the designer/analyzer/engineer to correctly adjust thresholds relying on static pressure and vorticity magnitude. There are several flow regions apart from the tip vortices where the static pressure is low and the vorticity is high, reducing the probability of those two criteria to extract cells or points associated to tip vortices. Furthermore, the pressure and vorticity thresholds set for one case probably have to be changed for different flow problems.

The present invention is addressed to the solution of this problem, by increasing the probability of the Banks & Singer pre-processing step to find candidate cells or points that develop into a tip vortex core line.

## SUMMARY OF THE INVENTION

It is an object of the present invention to provide a computer-aided method suitable for assisting in the design of an object zone subjected to high vorticity and/or low static pressure fields when moving inside a flow field by providing suitable seed points for constructing vortex core lines in a fluid data model of the environment of said object zone.

The fluid data model comprises a CFD dataset and/or wind tunnel data and/or experimental volumetric data and/or flow field analytical data.

The computer-aided method can be employed to provide the candidate seeds from which vortex core lines develop, following the predictor step and the correction treatment of the above-mentioned Banks & Singer method or any other suitable Line-based (LB) method.

The computer-aided method comprises the following steps:

  a) Obtaining a dataset of candidate seeds containing all the cells or points satisfying:

  - the condition $dp/dX > dp/dX_{threshold}$, being $dp/dX$ the pressure gradient in the direction of the flow and $dp/dX_{threshold}$ a suitable parameter for the object zone;
  - or the condition $C_{df} > C_{df,threshold}$, being $C_{df}$ the drag friction coefficient at the solid boundaries and $C_{df,\,threshold}$ a suitable parameter for the object zone.

  b) Updating the previous dataset of candidate seeds with all the cells or points satisfying the condition not used for obtaining the dataset in step a).

The final dataset contains the above-mentioned candidate seeds.

It is another object of the invention to provide a system comprising a computer memory and processor for assisting in the design of an object zone subjected to high vorticity and/or low static pressure fields when moving inside a flow field by providing suitable seed points for obtaining vortex core lines in a fluid data model of the environment of said object zone.

The system comprises a fluid data model of the environment of said object zone and a computer-implemented module for identifying cells or points of the object zone following the steps of the above-mentioned method.

In an embodiment of said method and system the object is an aircraft.

In another embodiment of said method and system the object zone is a Counter Rotating Open Rotor (CROR) engine of an aircraft.

In another embodiment of said method and system the object zone is a Counter Rotating Open Rotor (CROR) engine of an aircraft and the fluid data model comprises an area covering the vortices generated by a blade tip of the first stage of the engine that impact the second stage of the engine.

Other desirable features and advantages of the invention will become apparent from the subsequent detailed description of the invention and the appended claims, in relation with the enclosed drawings.

## BRIEF DESCRIPTION OF THE DRAWINGS

  Figure 1 illustrates the four steps of the Banks & Singer pressure-predictor vorticity-corrector method (from [8]).

  Figure 2 shows the computational domain and the structured mesh of an aircraft CROR engine used in an embodiment of the invention.

  Figures 3a and 3b show, respectively a volumetric dataset and the superficial dataset resulting from its projection illustrating the step 3 of the method according to this invention in a CROR engine case.

  Figure 4 shows the location of the extracted superficial points after performing step 6 of the method according to this invention, for two values of $dp/dX$ in a CROR engine case.

  Figure 5 shows the location of the extracted superficial points after performing step 8 of the method according to this invention, for two values of $C_{df}$ in a CROR engine case.

**DETAILED DESCRIPTION OF THE INVENTION**

The method comprises the following steps:

1. Calculate the gradients of the three velocity components ($V_x$, $V_y$, $V_z$) and the static pressure gradient ($\nabla p$), at each cell or point of the computational domain.

2. Compute the pressure gradient in the direction of the flow ($dp/dX$), as the scalar projection of $\nabla p$ onto $V$:

$$\frac{dp}{dX} = \frac{\nabla p \cdot V}{|V|} = \frac{(dp/dx)V_x + (dp/dy)V_y + (dp/dz)V_z}{\sqrt{V_x^2 + V_y^2 + V_z^2}} \qquad (1)$$

where Xis the local direction of the flow.

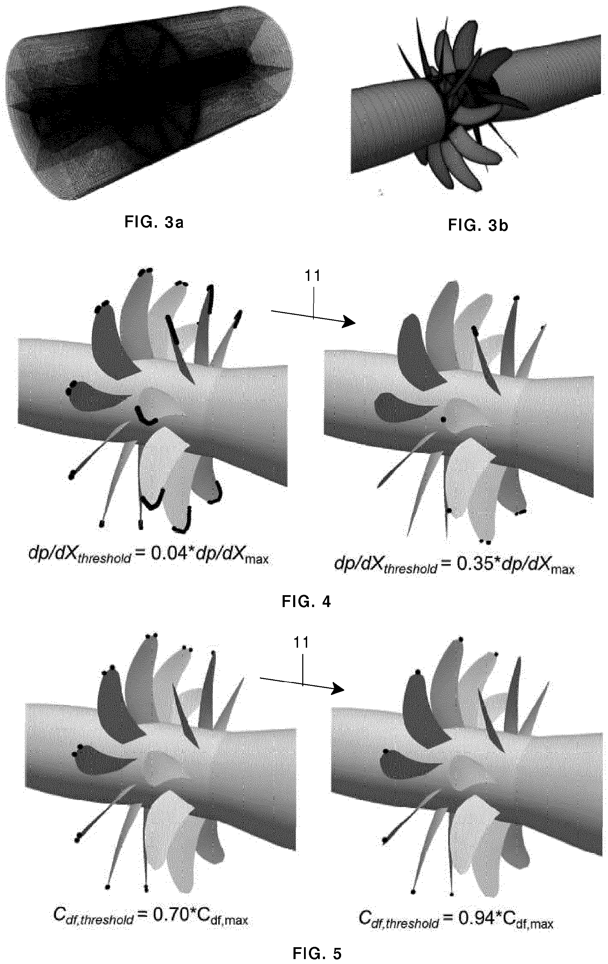

3. Project the volume information of the dataset that also contains the variables calculated in steps 1 and 2 into the matching superficial nodes. The result of this operation is a new superficial dataset, wherein the last layer of cells or points of the original volumetric dataset is projected towards the surface cells or points that are locally matching. This process is illustrated in Figure 3. At each cell or point of the superficial dataset created after step 3, approximate the nine single components of the stress tensor by:

$$\tau_{ij} = -p\delta_{ij} + \mu\left(\frac{dV_i}{dx_j} + \frac{dV_j}{dx_i}\right) \qquad (2)$$

where

$$\delta_{ij} = \begin{cases} 1 & \text{if} \quad i = j \\ \\ 0 & \text{if} \quad i \neq j \end{cases} \qquad (3)$$

and where the dynamic viscosity $\mu$ is a property of the working fluid.

5. The drag friction coefficient is then calculated by means of the following equation:

$$C_{df} = C_{df,x} + C_{df,y} + C_{df,z} \qquad (4)$$

with:

$$C_{df,x} = \frac{(\tau_{xx}\cos\alpha\cos\beta + \tau_{yx}\cos\alpha\sin\beta + \tau_{zx}\sin\alpha) \times Normals_x}{S_{ref}} \qquad (5a)$$

$$C_{df,y} = \frac{(\tau_{xy}\cos\alpha\cos\beta + \tau_{yy}\cos\alpha\sin\beta + \tau_{zy}\sin\alpha) \times Normals_y}{S_{ref}} \qquad (5b)$$

$$C_{df,z} = \frac{(\tau_{xz}\cos\alpha\cos\beta + \tau_{yz}\cos\alpha\sin\beta + \tau_{zz}\sin\alpha) \times Normals_z}{S_{ref}}$$

(5c)

and where $\alpha$ represents the angle of attack, $\beta$ the angle of sideslip, $S_{ref}$ the reference area, and $Normals_i$ the surface normals in the $i$-direction. After the present step, the parameters $dp/dX$ and $C_{df}$ must comprise the superficial dataset.

6. For the pressure gradient in the direction of the flow ($dp/dX$):

- Define a positive threshold value for $dp/dX$ ($dp/dX_{threshold}$).
- Extract cells or points where $dp/dX > dp/dX_{threshold}$ from the superficial dataset previously created in step 5.

7. Create a new dataset containing the candidate seeds resulting from the superficial cells or points extracted in step 6.

8. For the drag friction coefficient ($C_{df}$):

- Define a positive threshold value for $C_{df}$ ($C_{df,threshold}$).
- Extract cells or points where $C_{df} > C_{df,threshold}$ from the superficial dataset previously created in step 5.

9. The dataset previously created in step 7, which contains candidate seeds, is then updated with the information derived from the extraction in step 8. This final dataset contains the candidate seeds for the subsequent predictor/corrector phase of the Banks & Singer method.

The method according to this invention improves the quality and reduces the uncertainty of the original pre-processing step of the Banks & Singer method, which relies only on high vorticity and low pressure thresholds, as it increases the probability of the aforementioned LB method to find candidate cells or points that will develop into a tip vortex core line in the subsequent predictor/corrector phase. On the one hand, adverse pressure gradients in the direction of the flow induce the formation of the "separated" tip vortex from the first blade row. The extraction of cells or points where this parameter is higher than zero enhances thus the probability to find "good" candidate seeds, i.e. seeds that will evolve into a tip vortex core line. On the other hand, the method according to this invention searches also for surface cells or points where the drag friction coefficient is high, suggesting high local aerodynamic losses. For the example being considered with respect to a CROR problem, the formation of tip-vortices, but also a tip-vortex-blade impact condition, has a significant contribution to the overall aerodynamic losses of the system. With the combination of these two superficial aerodynamic parameters, a more intelligent selection of candidate seeds is granted, but also the quality of the initialization process becomes less dependent upon the human's selection of thresholds, in comparison to the thresholds of vorticity magnitude and static pressure of the original initialization.

The advantages introduced by the method according to this invention are presented in the following Table 1, for the example being considered with respect to a CROR CFD simulation. This table compares the number of points extracted with the original static pressure ($P$) and vorticity magnitude ($|\omega|$) threshold method, with those extracted with parameters used by the method according to this invention ($dp/dX$ and $C_{df}$), and provides information about if the extracted points are related with the tip vortex generated from the first blade row. The graphical information for threshold 1 and 3 of $dp/dX$ and $C_{df}$ is depicted in Figures 4 and 5, respectively (arrow 11 shows the flow direction).

Table 1 shows that the method according to this invention is much less sensitive to the selection of thresholds, when confronted to pressure and vorticity magnitude thresholds. For the latter, seeds associated with the tip vortex can only be extracted with a threshold in the order of 0.0003 the maximum vorticity magnitude of the computational domain. For the static pressure, only by setting a threshold from 6 times its minimum value inside the computational domain, the extraction of cells related with the tip vortex is possible. The method according to the present invention also enables a significant drop of the number of candidate seeds extracted, allowing thus an important reduction of the computational burden of the Banks & Singer method.

| | Threshold on | | | |
|---|---|---|---|---|
| | $P^*$ | $|\omega|^*$ | $dp/dX$ | $C_{df}$ |
| Threshold 1 | $6.0*P_{min}$ | $0.0003*|\omega|_{max}$ | $0.04*dp/dX_{max}$ | $0.70*C_{df,max}$ |
| # $Pts_1$ | 10619111 | 19806357 | 6319 | 701 |
| Pts within tip vortex from 1st row | YES | YES | YES | YES |
| Threshold 2 | $5.0*P_{min}$ | $0.1*|\omega|_{max}$ | $0.17*dp/dX_{max}$ | $0.82*C_{df,max}$ |
| # $Pts_2$ | 2357355 | 387408 | 2042 | 60 |
| Pts within tip vortex from 1st row | NO | NO | YES | YES |
| Threshold 3 | $3.5*P_{min}$ | $0.8*|\omega|_{max}$ | $0.35*dp/dX_{max}$ | $0.94*C_{df,max}$ |
| # $Pts_3$ | 456848 | 84 | 702 | 60 |
| Pts within tip vortex from 1st row | NO | NO | NO | YES |

* with original Banks & Singer initialization

Table 1

Although the present invention has been described in connection with various embodiments, it will be appreciated from the specification that various combinations of elements, variations or improvements therein may be made, and are within the scope of the invention as defined by the appended claims.

**REFERENCES**

[1] H. Lugt, Vortex Flow in Nature and Technology (Wiley, 1972).

[2] S. Robinson, Annual Review Fluid Mechanics 23, 601 (1991).

[3] L. Portela, Ph.D. thesis, Stanford University, California (1997).

[4] V. Kolár, in Proceedings of the 8th WSEAS International Conference on Fluid Mechanics, 8th VVSEASInternational Conference on Heat and Mass Transfer (World Scientific and Engineering Academy and Society (WSEAS), Stevens Point, Wisconsin, USA, 2011), FM'11/HMT'11, pp. 23-28, ISBN 978-960-474-268-4, URL http://dl.acm.ora/citation.cfm?id=1959560.1959564.

[5] C. Garth, An introduction to flow visualization (5), http://graphics.cs.ucdavis.edu/-joy/ecs277/other-notes/ecs277-5.pdf, accessed: 2014-09-09.

[6] M. Jiang, R. Machiraju, and D. Thompson, in The Visualization Handbook (Academic Press, 2005), pp. 295-309.

[7] C. Garth, X. Tricoche, T. Salzbrunn, T. Bobach, and G. Scheuermann, in Proceedings of the Sixth Joint Eurographics - IEEE TCVG Conference on Visualization (Eurographics Association, Aire-la-Ville, Switzerland, 2004), VISSYM'04, pp. 155-164, ISBN 3-905673-07-X.

[8] D. Banks and B. Singer, IEEE Transactions on Visualization and Computer Graphics 1, 151 (1995).

**Claims**

1. A computer-aided method suitable for assisting in the design of an object zone subjected to high vorticity and/or low static pressure fields when moving inside a flow field by providing suitable seed points for obtaining vortex core lines in a fluid data model of the environment of said object zone comprising the following steps:

   a) Obtaining a dataset of candidate seeds containing all the cells or points satisfying:

   - the condition $dp/dX > dp/dX_{threshold}$, being $dp/dX$ the pressure gradient in the direction of the flow and $dp/dX_{threshold}$ a suitable parameter for the object zone;
   - or the condition $C_{df} > C_{df,threshold}$, being $C_{df}$ the drag friction coefficient at the solid boundaries and $C_{df, threshold}$ a suitable parameter for the object zone.

   b) Updating the previous dataset of candidate seeds with all the cells or points satisfying the equation not used for obtaining the dataset in step a).

2. A computer-aided method according to claim 1, wherein the fluid data model comprises a CFD dataset and/or wind tunnel data and/or experimental volumetric data and/or flow field analytical data.

3. A computer-aided method according to any of claims 1-2, wherein said object is an aircraft.

4. A computer-aided method according to claim 3, wherein said object zone is a Counter Rotating Open Rotor (CROR) engine.

5. A computer-aided method according to claim 4, wherein said fluid data model comprises an area covering the vortices generated by a blade tip of the first stage of the engine that impact the second stage of the engine.

6. A system comprising a computer memory and processor for assisting in the design of an object zone subjected to high vorticity when moving in a flow field by providing suitable seed points for obtaining vortex core lines in a fluid data model of the environment of said object zone, said computer memory having stored thereon modules comprising a computer-implemented fluid data model of the environment of said object zone and a computer-implemented module for identifying cells of points of said object zone satisfying vorticity conditions, wherein said computer-implemented module comprises means for performing said identification in the following steps:

   a) Obtaining a dataset of candidate seeds containing all the cells or points satisfying:

   - the condition $dp/dX > dp/dX_{threshold}$, being $dp/dX$ the pressure gradient in the direction of the flow and $dp/dX_{threshold}$ a suitable parameter for the object zone;
   - or the condition $C_{df} > C_{df,threshold}$, being $C_{df}$ the drag friction coefficient at the solid boundaries and $C_{df, threshold}$ a suitable parameter for the object zone.

   b) Updating the previous dataset of candidate seeds with all the cells or points satisfying the equation not used for obtaining the dataset in step a).

7. A system according to claim 6, wherein the fluid model comprises a CFD dataset and/or wind tunnel data and/or experimental volumetric data and/or flow field analytical data.

8. A system according to any of claims 6-7, wherein said object is an aircraft.

9. A system according to claim 8, wherein said object zone is a Counter Rotating Open Rotor (CROR) engine.

10. A system according to claim 9, wherein said fluid data model comprises an area covering the vortices generated by a blade tip of the first stage of an engine that impact the second stage of the engine.

**FIG. 1**

**FIG. 2**

FIG. 3a

FIG. 3b

$dp/dX_{threshold} = 0.04*dp/dX_{max}$

$dp/dX_{threshold} = 0.35*dp/dX_{max}$

FIG. 4

$C_{df,threshold} = 0.70*C_{df,max}$

$C_{df,threshold} = 0.94*C_{df,max}$

FIG. 5

Europäisches
Patentamt

European
Patent Office

Office européen
des brevets

# EUROPEAN SEARCH REPORT

**Application Number**

EP 16 38 2604

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Clifton H Mortensen: "A Computational Fluid Dynamics Feature Extraction Method Using Subjective Logic", , 8 July 2010 (2010-07-08), pages 1-164, XP055366011, Retrieved from the Internet: URL:http://scholarsarchive.byu.edu/cgi/viewcontent.cgi?article=3207&context=etd [retrieved on 2017-04-20] * sections 1.2, 1.4; pages 5,7 * * the whole document * ----- | 1-10 | INV. G06F17/50 |
| A | Václav Kolár: "Brief Notes on Vortex Identification", Proceeding FM'11/HMT'11 Proceedings of the 8th WSEAS international conference on fluid mechanics, 8th WSEAS international conference on Heat and mass transfer Pages 23-28, 29 January 2011 (2011-01-29), pages 1-6, XP055366001, ISBN: 978-960-474-268-4 Retrieved from the Internet: URL:http://www.wseas.us/e-library/conferences/2011/Mexico/MAFLUH/MAFLUH-03.pdf [retrieved on 2017-04-20] * page 1; table 1 * * the whole document * ----- | 1-10 | |

TECHNICAL FIELDS
SEARCHED (IPC)

G06F

The present search report has been drawn up for all claims

| Place of search | Date of completion of the search | Examiner |
|---|---|---|
| Munich | 2 June 2017 | Dapp, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..........................................................................

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H. LUGT.** Vortex Flow in Nature and Technology. Wiley, 1972
- **S. ROBINSON.** *Annual Review Fluid Mechanics,* 1991, vol. 23, 601
- **L. PORTELA.** Ph.D. thesis. Stanford University, 1997
- **V. KOLÁR.** Proceedings of the 8th WSEAS International Conference on Fluid Mechanics, 8th VVSEASInternational Conference on Heat and Mass Transfer. World Scientific and Engineering Academy and Society (WSEAS), 2011, 23-28
- **C. GARTH.** *An introduction to flow visualization,* 09 September 2014, http://graphics.cs.ucdavis.edu/-joy/ecs277/other-notes/ecs277-5.pdf
- **M. JIANG ; R. MACHIRAJU ; D. THOMPSON.** The Visualization Handbook. Academic Press, 2005, 295-309
- **C. GARTH ; X. TRICOCHE ; T. SALZBRUNN ; T. BOBACH ; G. SCHEUERMANN.** Proceedings of the Sixth Joint Eurographics - IEEE TCVG Conference on Visualization. Eurographics Association, 2004, 155-164
- **D. BANKS ; B. SINGER.** *IEEE Transactions on Visualization and Computer Graphics,* 1995, vol. 1, 151